# FASCICULE DE BREVET EUROPEEN

(11) **EP 2 629 988 B1**
(45) Date de publication et mention de la délivrance du brevet: **25.02.2015**
(21) Numéro de dépôt: 11770817.2
(22) Date de dépôt: 20.10.2011
(51) Int. Cl.: B60C 9/18, B60C 1/00

(54) **PNEUMATIQUE**
REIFEN
TIRE

(30) Priorité: 22.10.2010 FR 1058636
(43) Date de publication de la demande: 28.08.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: REHAB, Hichem, F-63040 Clermont-Ferrand Cedex 9 (FR); DOMINGO, Alain, F-63040 Clermont-Ferrand Cedex 9 (FR)
(74) Mandataire: Le Cam, Stéphane Georges Elie
(86) Numéro de dépôt international: PCT/EP2011/068372
(87) Numéro de publication internationale: WO 2012/052522

(56) Documents cités:
- EP-A1- 1 659 000
- EP-A2- 2 028 229
- FR-A1- 2 943 680
- JP-A- 7 009 813
- US-A- 4 572 263

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

La direction circonférentielle du pneumatique, ou direction longitudinale, est la direction correspondant à la périphérie du pneumatique et définie par la direction de roulement du pneumatique.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La direction transversale ou axiale du pneumatique est parallèle à l'axe de rotation du pneumatique. Une distance axiale est mesurée selon la direction axiale. L'expression « axialement intérieur à, respectivement axialement extérieur à» signifie « dont la distance axiale mesurée depuis le plan équatorial est inférieure à, respectivement supérieure à ».

La direction radiale est une direction coupant l'axe de rotation du pneumatique et perpendiculaire à celui-ci. Une distance radiale est mesurée selon la direction radiale. L'expression « radialement intérieur à, respectivement radialement extérieur à » signifie « dont la distance radiale mesurée depuis de l'axe de rotation du pneumatique est inférieure à, respectivement supérieure à ».

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquente l'apparition et la propagation de fissures de la gomme au niveau desdites extrémités. Ce problème existe dans le cas de bords de deux couches d'éléments de renforcement, lesdites couches n'étant pas obligatoirement radialement adjacentes.

Afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérésis, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

La demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

La demande française WO 99/24269 propose encore, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

Cette amélioration de l'endurance des pneumatiques permet d'envisager au moins la possibilité d'un rechapage lorsque la bande de roulement est usée. En effet, lorsqu'il est souhaité faire un rechapage du pneumatique après usure de la bande de roulement, il faut être en mesure de rechaper un pneumatique dont le vieillissement n'est pas trop avancé afin d'optimiser l'utilisation de la nouvelle bande de roulement.

Par ailleurs, les pneumatiques de tels véhicules peuvent subir des endommagements au travers de la bande de roulement par exemple du fait de la pénétration d'un clou ou d'un boulon. De telles perforations de la bande de roulement peuvent ne pas être trop pénalisantes notamment si l'objet pénétrant est éliminé rapidement notamment par une action humaine dès que la présence de l'objet est détectée.

Par contre, si cette présence n'est pas détectée et si l'objet pénètre au travers de l'armature de sommet du pneumatique jusqu'à la cavité interne du pneumatique, cela entraîne une perte de l'air de gonflage qui est drainée lentement le long de l'objet.

Une telle perte de l'air de gonflage aussi lente soit-elle conduit à une baisse de pression qui doit alerter le conducteur et permettre de détecter l'objet et de l'éliminer pour réparer le pneumatique. Encore une fois si cette détection est suffisamment rapide l'endommagement du pneumatique peut être très limité voire inexistant, un rechapage du pneumatique n'étant pas pour autant remis en cause.

Il s'avère qu'aujourd'hui certains véhicules sont équipés de dispositif de regonflage automatique des pneumatiques dès lors qu'une baisse de pression est détectée par des capteurs. Cette opération de regonflage est alors le plus souvent réalisée à l'insu du conducteur. Une telle opération intervenant dans le cas d'une perforation telle que présentée ci-dessus, il devient alors possible que le pneumatique continue à rouler avec un objet perforant pendant un temps relativement important permettant par exemple à l'air de gonflage d'arriver jusqu'aux mélanges caoutchouteux constitutifs du pneumatique entre la cavité de celui-ci et la surface extérieure de sa bande de roulement.

L'objet qui peut n'être détecté qu'au moment de l'étape de rechapage du pneumatique conduit alors à la décision de ne pas effectuer ledit rechapage, les éléments constitutifs du pneumatique ayant été soumis à une oxydation pendant une durée inconnue. Une telle oxydation peut effectivement avoir conduit à un vieillissement prématuré du pneumatique notamment en favorisant la propagation de fissures au sein des mélanges caoutchouteux, lesdites fissures ayant été amorcées lors de la pénétration de l'objet.

Il est par ailleurs connu d'utiliser des mélanges polymériques comportant des sels métalliques tels que des sels de cobalt, notamment pour favoriser l'adhésion entre les mélanges polymériques et le métal constituant les éléments de renforcement. De tels mélanges sont par exemple décrit dans les documents EP 1 659 000, JP 7 009813, EP 2 028 229, FR 2 943 680, et US 4 572 263.

Les inventeurs se sont ainsi donnés pour mission d'être en mesure de fournir des pneumatiques moins vulnérables à la présence d'un objet ayant perforé la bande de roulement jusqu'à la cavité du pneumatique, notamment dans le cas de pneumatiques destinés à être utilisés sur des véhicules équipés de dispositifs automatiques de regonflage en cas de perte de pression.

Ce but a été atteint selon l'invention par un pneumatique à armature de carcasse radiale, constituée d'au moins une couche d'éléments de renforcement métalliques, ledit pneumatique comprenant une armature de sommet, elle-même coiffée radialement d'une bande de roulement, ladite bande de roulement étant réunie à deux bourrelets par l'intermédiaire de deux flancs, ledit pneumatique comprenant une première couche de mélange polymérique radialement entre l'armature de carcasse et la couche d'éléments de renforcement radialement la plus intérieure de l'armature de sommet, ladite première couche de mélange polymériques constituant une zone tampon prévue pour piéger l'oxygène extérieur à ladite première couche et la largeur axiale de ladite première couche étant au moins égale à 70 % de la largeur de la couche d'éléments de renforcement radialement la plus intérieure de l'armature de sommet.

Selon l'invention, la largeur axiale de ladite première couche est au plus égale à la largeur de la couche d'éléments de renforcement radialement la plus intérieure de l'armature de sommet.

De préférence, la largeur axiale de ladite première couche est au moins égale à 90 % de la largeur de la couche d'éléments de renforcement radialement la plus intérieure de l'armature de sommet.

Selon l'invention l'épaisseur, mesurée selon la direction radiale, de ladite première couche est supérieure à φ, φ étant le diamètre des éléments de renforcement de la couche d'armature de sommet radialement la plus intérieure.

De préférence, l'épaisseur, mesurée selon la direction radiale, de ladite première couche est inférieure à 3φ.

De telles épaisseurs conduisent à un dimensionnement de la première couche de mélange polymérique offrant un compromis entre le surcoût lié au mélange polymérique et la propagation des fissures amorcées lors de la perforation par l'objet.

Avantageusement selon l'invention, l'épaisseur de ladite première couche, mesurée selon la direction radiale, est supérieure à 1 mm et de préférence supérieure à 1.4 mm. Les inventeurs ont su mettre en évidence que de telles épaisseurs assuraient une limitation de la propagation des fissures dans la plupart des incidents pouvant survenir par perçage de la bande de roulement par un objet tel qu'un clou ou un boulon.

Comme énoncé précédemment, il est connu que la présence d'oxygène conduit à des processus oxydants, des compositions de caoutchouc et/ou des renforts métalliques ou textiles et/ou des interfaces entre ces compositions de caoutchouc et ces renforts.

Il est par ailleurs connu pour éviter les problèmes d'oxydation de piéger chimiquement l'oxygène par thermo-oxydation accélérée d'une composition de caoutchouc servant de tampon, disposée entre une source principale d'oxygène et la zone que l'on veut protéger contre les phénomènes d'oxydation. Une telle composition tampon est connue pour être habituellement utilisée entre la gomme formant la couche intérieure du pneumatique et la nappe carcasse pour diminuer la quantité d'oxygène qui arrive au contact de cette nappe en provenance de l'air de gonflage.

Les inventeurs ont su mettre en évidence que la présence de ladite première couche de mélange polymérique radialement entre l'armature de carcasse et la couche d'éléments de renforcement radialement la plus intérieure de l'armature de sommet avec les dimensions précitées peut être suffisante pour limiter la propagation des fissures au sein des mélanges polymériques constitutifs du pneumatique dans un grand nombre de cas. Les inventeurs ont notamment mis en évidence que la grande majorité des incidents évoqués précédemment qui conduisent à un ancrage dans le pneumatique d'un objet ayant perforé le pneumatique se situe dans des zones correspondant aux parties de la surface de la bande de roulement axialement les plus extérieures. Les essais réalisés ont montré que ladite première couche de mélange polymérique ainsi décrite permet ainsi de limiter la propagation d'un grand nombre de fissures initialisées lorsqu'un objet perfore le pneumatique. Les essais ont encore montré qu'il est alors possible d'envisager un rechapage des pneumatiques malgré la présence d'un objet ayant perforé le pneumatique après réparation de celui-ci. En effet, les essais ont mis en évidence qu'un pneumatique selon l'invention comportant un objet perforant pouvait rouler au moins 50 % de kilomètres en plus qu'un pneumatique usuel sans laisser apparaître de propagation de fissuration rédhibitoire à un rechapage.

En outre, de tels mélanges polymériques présentant un coût non négligeable, une taille limitée d'une telle première couche conformément à l'invention autorise des gains significatifs en espérance de rechapage pour un surcoût initial tout à fait acceptable.

Pour réaliser de tels mélanges polymériques susceptibles de constituer des zones tampon prévues pour piéger l'oxygène, l'invention propose selon une réalisation avantageuse de l'invention des compositions tampon comportant un sel métallique qui catalyse l'oxydation.

Avantageusement encore, le sel métallique est un sel de cobalt.

Ce sel a pour effet d'activer la décomposition homolytique des hydroperoxydes générés lors du vieillissement provoqué par les phénomènes d'oxydation précités. Ce sel est introduit de préférence dans une quantité de 0,2 à 0,3 partie en poids en équivalent cobalt pour 100 parties en poids de l'élastomère dans la composition tampon. On augmente ainsi de 50 à 100 % environ la quantité d'oxygène qui peut être piégée par cette composition tampon, par rapport à la même composition dépourvue de sel de cobalt.

Le document de brevet européen EP-A-507 207 décrit par exemple des mélanges polymériques comprenant un sel de métal de transition prévu pour activer la fixation d'oxygène. Comme proposé ci-dessus, les sels métalliques qui sont décrits à titre préférentiel sont des sels de cobalt. A titre subsidiaire, d'autres métaux tels que le manganèse et le fer sont également envisagés.

Les documents de brevet internationaux WO-A-99/24502 et WO-A-00/68309 et la demande de brevet européen EP 1 215 232 décrivent des pneumatiques comportant une zone tampon entre le mélange polymérique formant la cavité du pneumatique et l'armature de carcasse. Ces zones tampon sont formées de mélanges polymériques comprenant au moins un sel de fer (III) spécifique prévu pour activer l'oxydation dans ladite composition. Ces produits sont obtenus en incorporant par travail mécanique ledit sel à l'élastomère ou aux élastomères que comprennent lesdits mélanges, pour l'obtention de ladite zone tampon.

Dans le document WO-A-99/24502, ledit sel appartient au groupe constitué par l'acétylacétonate de fer (III) et par les sels de fer (III) d'acides carboxyliques répondant à la formule Fe(CₙH₂ₙO₂)₃, où n peut aller de 6 à 23.

Dans le document WO-A-00/68309, ledit sel est un sel de fer (III) d'un acide carboxylique répondant à la formule Fe(CₙH₂ₙO₂)₃, où n peut aller de 2 à 5.

Dans le document EP 1 215 232, ledit sel est un sel de fer (III) d'un acide aromatique mono-carboxylique comportant un ou plusieurs cycles aromatiques.

Les pneumatiques décrits dans ces trois documents permettent par ailleurs une réduction des pertes hystérétiques dans la zone tampon, en comparaison d'une zone tampon réalisé par exemple avec un sel de cobalt. La sélection de ces sels de fer (III) spécifiques permet en outre de réduire les phénomènes d'auto-échauffement lors du roulage et donc améliore la durée de vie du pneumatique. En outre, elle contribue à diminuer la résistance au roulement.

Les zones tampons décrites dans ces documents correspondent à des mélanges polymériques permettant de bloquer l'éventuelle migration de l'oxygène provenant de la cavité, cet oxygène traversant tout d'abord une couche formant la cavité du pneumatique quasi-étanche, habituellement constituée de butyl.

Les inventeurs ont encore su mettre en évidence que ce type de mélange polymérique destiné à bloquer des traces d'oxygène pouvait également avoir pour fonction de bloquer la présence d'oxygène amené par drainage le long du corps étranger venu perforer le pneumatique jusqu'à la cavité de celui-ci depuis la bande de roulement de celui-ci, ledit oxygène étant alors présent avec une pression correspondant à celle de gonflage.

Les inventeurs ont encore montré que l'augmentation du module d'élasticité d'un tel mélange polymérique comportant un sel métallique par rapport à un mélange polymérique n'en comportant pas est acceptable. En effet, la présence d'une couche d'un mélange polymérique entre l'armature de carcasse et l'armature de sommet peut jouer le rôle d'amortisseur de chocs pour préserver l'intégrité des éléments de renforcement des différentes couches constitutives du pneumatique. La légère augmentation du module d'élasticité liée à la présence d'un sel métallique permet à la première couche de conserver ce rôle d'amortisseur de chocs.

Selon un mode de réalisation préféré de l'invention, la largeur axiale de ladite première couche de mélange polymérique est égale à la largeur de la couche d'éléments de renforcement radialement la plus intérieure de l'armature de sommet.

Selon ce mode de réalisation de l'invention, il est possible de limiter la propagation d'un plus grand nombre de fissures initialisées lorsqu'un objet perfore le pneumatique. En effet, comme énoncé précédemment, les inventeurs ont mis en évidence que ce type de perforation apparaît plus fréquemment au niveau des zones axialement extérieures de la bande de roulement. Il apparaît que selon ce mode de réalisation le plus grand nombre de ce type d'incidents est couvert et la propagation des fissures engendrées par ces perforations pourra être limitée.

Selon ce mode de réalisation de l'invention, ladite première couche de mélange polymérique constitue avantageusement la couche de calandrage radialement intérieure de la couche de l'armature de sommet radialement la plus intérieure.

Une couche d'éléments de renforcement est constituée d'un ensemble d'éléments de renforcement contenus entre deux couches de mélanges polymériques, dite couches de calandrages.

L'épaisseur de la couche de calandrage radialement intérieure de la couche de l'armature de sommet radialement la plus intérieure est alors définie de sorte que l'épaisseur, mesurée selon la direction radiale depuis le point radialement le plus intérieur d'un câble vers la surface radialement intérieure de ladite couche de calandrage, correspond à l'épaisseur précitée de ladite première couche. En d'autres termes, la couche de calandrage est prévue avec une épaisseur supérieure aux épaisseurs de couches de calandrage usuelles de sorte que son épaisseur, mesurée selon la direction radiale, au dos des câbles satisfait les relations énoncées précédemment et notamment doit être comprise entre une fois et trois fois le diamètre des éléments de renforcement de la couche radialement la plus intérieure. L'épaisseur de la couche de calandrage mesurée au dos des câbles qui est ainsi avantageusement d'au moins 1 mm est de l'ordre d'au moins quatre fois les épaisseurs obtenues avec des couches de calandrage plus usuelles.

En outre, ce mode de réalisation peut conduire à une variante dans le procédé de fabrication du pneumatique lorsque ladite première couche de mélange polymérique correspond à la couche de calandrage radialement intérieure de la couche de l'armature de sommet radialement la plus intérieure. Il est en effet possible de préparer une couche d'éléments de renforcement comportant deux couches de calandrage différentes de part leur nature et de part leur épaisseur. Une telle couche d'élément de renforcement peut alors être la couche radialement la plus intérieure du pneumatique. En termes de procédé, il est alors possible d'éliminer l'étape dans le processus de fabrication correspondant à la pose de ladite première couche de mélange polymérique.

Selon une première variante de l'invention, il est prévu une deuxième couche de mélange polymérique, celle-ci étant axialement au contact de la première couche de mélange polymérique, au contact de l'armature de carcasse et s'étendant axialement jusqu'au moins l'extrémité axiale de la bande de roulement, présentant une cohésion élevée et avantageusement une faible hystérèse. De tels mélanges polymériques sont par exemple décrits dans la demande de brevet EP 1 028 008. Il s'agit de mélange polymérique comportant notamment une charge renforçante constituée :
(i) soit par du noir de carbone de surface spécifique BET comprise entre 30 et 160 m²/g, employé à un taux égal ou supérieur à 15 pce et inférieur ou égal à 28 pce,
(ii) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique comprise entre 30 et 260 m²/g employée à un taux supérieur ou égal à 15 pce et inférieur ou égal à 40 pce,
(iii) soit par un coupage de noir de carbone décrit en (i) et une charge blanche décrite en (ii), dans lequel le taux global de charge est supérieur ou égal à 15 pce et inférieur ou égal à 50 pce et le taux en pce de charge blanche est supérieur ou égal au taux de noir de carbone en pce moins 5.

La présence d'une telle deuxième couche de mélange polymérique contribue encore à limiter la propagation de fissures amorcées lorsqu'un objet perfore la bande de roulement du pneumatique dans un nombre de cas encore plus important.

Selon une deuxième variante de l'invention, il est prévu une deuxième couche de mélange polymérique, celle-ci étant axialement au contact de la première couche de mélange polymérique, au contact de l'armature de carcasse et s'étendant axialement jusqu'au moins l'extrémité axiale de la bande de roulement, constituant une autre zone tampon prévue pour piéger l'oxygène extérieur à ladite deuxième couche comportant avantageusement un sel métallique qui catalyse l'oxydation.

Selon une troisième variante de l'invention, il est prévu une deuxième couche de mélange polymérique, celle-ci étant axialement au contact de la première couche de mélange polymérique, au contact de l'armature de carcasse et s'étendant axialement jusqu'au moins l'extrémité axiale de la bande de roulement, présentant une cohésion élevée et constituant une autre zone tampon prévue pour piéger l'oxygène extérieur à ladite deuxième couche comportant. Une telle deuxième couche de mélange polymérique est par exemple choisie parmi les mélanges polymériques décrits dans la demande de brevet EP 1 028 008 et comporte avantageusement un sel métallique qui catalyse l'oxydation.

Une autre variante de réalisation de l'invention prévoit selon ce même modèle que la première couche de mélange polymérique constitue une zone tampon conformément à l'invention sur la base d'un mélange polymérique tel que décrit dans la demande de brevet EP 1 028 008.

Selon un mode de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres modes de réalisation de l'invention, l'armature de sommet comporte encore au moins une couche d'éléments de renforcement circonférentiels.

Une réalisation de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

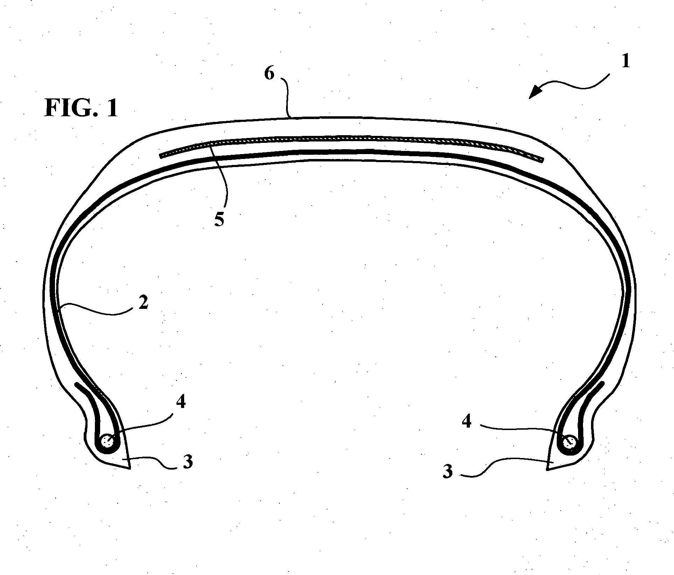

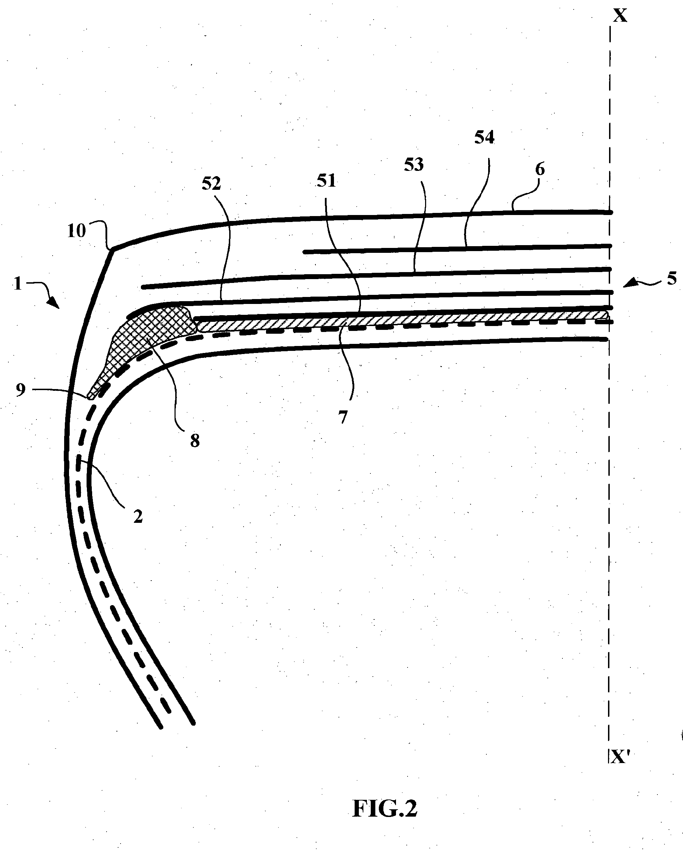

D'autres détails et caractéristiques avantageux de l'invention ressortiront ci-après de la description d'exemples de réalisation de l'invention en référence aux figures 1 et 2 qui représentent :
- figure1, une vue méridienne d'un schéma d'un pneumatique selon l'invention,
- figure2, une représentation schématique d'une demi-vue du pneumatique de la figure1, qui se prolonge de manière symétrique par rapport à l'axe XX' qui représente le plan médian circonférentiel, ou plan équatorial,

Les figures ne sont pas représentées à l'échelle pour en simplifier la compréhension.

Sur la figure 1, le pneumatique 1, de dimension 275/80 R 22.5, comprend une armature de carcasse radiale 2 ancrée dans deux bourrelets 3, autour de tringles 4. L'armature de carcasse 2 est formée d'une seule couche de câbles métalliques. L'armature de carcasse 2 est frettée par une armature de sommet 5, elle-même coiffée d'une bande de roulement 6.

Les zones basses et bourrelets du pneumatique 1 ne sont notamment pas représentés sur la figure 2.

Sur la figure 2, l'armature de sommet 5 est formée radialement de l'intérieur à l'extérieur :
- d'une couche de triangulation 51 formée de câbles métalliques inextensibles 9.28 non frettés, continus sur toute la largeur de la nappe, orientés d'un angle égal à 65°,
- d'une première couche de travail 52 formée de câbles métalliques inextensibles 11.35 non frettés, continus sur toute la largeur de la nappe, orientés d'un angle égal à 18°,
- d'une seconde couche de travail 53 formée de câbles métalliques inextensibles 11.35 non frettés, continus sur toute la largeur de la nappe, orientés d'un angle égal à 18° et croisés aux câbles métalliques de la première couche de travail,
- d'une couche de protection 54 formée de câbles métalliques élastiques 6.35 non frettés, continus sur toute la largeur de la nappe, orientés d'un angle égal à 18° dans le même sens que les câbles métalliques de la couche de travail 53.

Conformément à l'invention, radialement entre l'armature de carcasse 2 et la couche de triangulation 51, on trouve la première couche de mélange polymérique 7 qui forme une zone tampon pour piéger l'oxygène pouvant notamment provenir de la cavité du pneumatique 1 lorsqu'un objet tel qu'un clou ou boulon vient percer la bande de roulement 6 et traverse le pneumatique jusqu'à la cavité.

L'épaisseur, mesurée selon la direction radiale, de ladite couche de mélange polymérique 7 est égale à 1.5 mm. Le diamètre des câbles de la couche de triangulation 51 étant égal à 1.07 mm, l'épaisseur de ladite couche de mélange polymérique 7 est bien comprise entre une fois et trois le diamètre de ces câbles.

Comme expliqué précédemment, lorsqu'un tel objet vient perforer le pneumatique et reste en place, la fuite d'air est limitée puisque l'objet obture le trou qu'il a formé. Une telle fuite peut être quasi-invisible pour le conducteur. Ceci est d'autant plus vrai lorsque le véhicule est équipé d'un dispositif de regonflage automatique des pneumatiques pour maintenir une pression de consigne.

Dans de nombreux cas, si cette légère fuite d'air n'est pas visible, elle conduit à la présence de passage d'air, voire à la formation de poche d'air au sein des masses polymériques constitutives du pneumatique favorisant notamment la propagation des fissures amorcées lors de la pénétration de l'objet. Ce phénomène est d'autant plus important que l'air présent est sensiblement à la pression de l'air de gonflage et ainsi de l'ordre de 8 à 9 bars pour un pneumatique équipant un véhicule de type poids-lourd.

Sur cette figure 2, conformément à une variante de réalisation de l'invention, une deuxième couche de mélange polymérique 8 est positionnée au contact de la première couche de mélange polymérique, au contact de l'armature de carcasse et son extrémité axialement extérieure 9 s'étend axialement au-delà de l'extrémité axiale 10 de la bande de roulement 6. Cette deuxième couche de mélange polymériques 8 présente une bonne cohésion et des propriétés hystérétiques relativement faibles. La bonne cohésion de cette couche 8 permet conformément à l'invention de contribuer également à diminuer les vitesses de propagation des fissures dans un plus grand nombre de cas.

La deuxième couche 8 peut par exemple correspondre à un mélange polymérique tel que décrit dans la demande de brevet EP 1 028 008. Les propriétés de bonne cohésion des mélanges polymériques sont notamment liées à l'allongement à la rupture du matériau mesuré selon la norme ISO37-1977.

Des essais de roulage ont été effectués avec un pneumatique selon l'invention comportant uniquement une première couche polymérique 7, telle que représentée sur la figure 2, comportant un sel de cobalt. Cette composition est à base de caoutchouc naturel (peptisé) et de noir de carbone N330 (55 pce) ; elle comporte en outre les additifs suivants: soufre (6 pce), accélérateur sulfénamide (1 pce), ZnO (9 pce), acide stéarique (0,7 pce), antioxydant (1,5 pce), naphténate de cobalt (1 pce).

Pour effectuer une comparaison, des essais similaires sont effectués avec un pneumatique de référence identique au pneumatique selon l'invention, comportant également une première couche polymérique mais celle-ci ne comportant pas le sel de cobalt de sorte qu'elle ne forme pas une zone tampon.

Avant d'effectuer les essais, les pneumatiques subissent un prétraitement consistant d'une part en une usure artificielle de la bande de roulement jusqu'aux témoins d'usure et d'autre part, un vieillissement accéléré en étuve dans des conditions sévères en termes de température et de teneur en oxygène dans l'air de gonflage.

Par ailleurs, les pneumatiques sont percés à l'aide d'un clou d'un diamètre de 3 mm depuis la bande de roulement jusqu'à la cavité du pneumatique en passant par la couche 7, le clou étant ensuite maintenu en place lors des essais.

Les essais sont réalisés dans des conditions de charge et vitesse définis pour conduire à une dégradation du pneumatique de référence correspondant à un état dudit pneumatique interdisant son rechapage après 15000 kilomètres parcourus dans lesdites conditions de ce test.

Les essais réalisés avec le pneumatique selon l'invention dans les mêmes conditions ont permis d'effectuer un roulage de 25000 kilomètres, le pneumatique pouvant être rechapé après bien entendu réparation des dommages occasionnés par le clou.

Ces essais mettent en évidence que la première couche de mélange polymérique permet de limiter la vitesse de propagation des amorces de fissures crées lors du passage du clou qui vient perforer le pneumatique.

## Revendications

1. Pneumatique (1) à armature de carcasse radiale (2), constituée d'au moins une couche d'éléments de renforcement métalliques, ledit pneumatique comprenant une armature de sommet (5), elle-même coiffée radialement d'une bande de roulement (6), ladite bande de roulement étant réunie à deux bourrelets par l'intermédiaire de deux flancs, ledit pneumatique comprenant une première couche (7) de mélange polymérique radialement entre l'armature de carcasse (2) et la couche (51) d'éléments de renforcement radialement la plus intérieure de l'armature de sommet (5), **caractérisé en ce que** ladite première couche (7) de mélange polymérique constitue une zone tampon prévue pour piéger l'oxygène extérieur à ladite première couche, **en ce que** la largeur axiale de ladite première couche (7) est au moins égale à 70 % de la largeur de la couche (51) d'éléments de renforcement radialement la plus intérieure de l'armature de sommet, **en ce que** la largeur axiale de ladite première couche (7) est au plus égale à la largeur de la couche (51) d'éléments de renforcement radialement la plus intérieure de l'armature de sommet (5) et **en ce que** l'épaisseur, mesurée selon la direction radiale, de ladite première couche (7) est supérieure à φ, φ étant le diamètre des éléments de renforcement de la couche (51) d'armature de sommet radialement la plus intérieure.

2. Pneumatique (1) selon la revendication 1, **caractérisé en ce que** l'épaisseur, mesurée selon la direction radiale, de ladite première couche (7) est inférieure à 3φ, φ étant le diamètre des éléments de renforcement de la couche (51) d'armature de sommet radialement la plus intérieure.

3. Pneumatique (1) selon l'une des revendications 1 ou 2, **caractérisé en ce que** l'épaisseur, mesurée selon la direction radiale, de ladite première couche (7) est supérieure à 1 mm, et de préférence supérieure à 1.4 mm.

4. Pneumatique (1) selon l'une des revendications 1 à 3, **caractérisé en ce que** ladite première couche (7) de mélange polymérique constitue la couche de calandrage radialement intérieure de la couche (51) de l'armature de sommet radialement la plus intérieure.

5. Pneumatique (1) selon l'une des revendications 1 à 4, **caractérisé en ce que** ladite première couche (7) de mélange polymérique constituant une zone tampon comporte un sel métallique.

6. Pneumatique (1) selon la revendication 5, **caractérisé en ce que** le sel métallique est un sel de cobalt.

7. Pneumatique (1) selon l'une des revendications précédentes, **caractérisé en ce que** ledit pneumatique comprend une deuxième couche (8) de mélange polymérique, **en ce que** ladite deuxième couche (8) de mélange polymérique est axialement au contact de la première couche (7) de mélange polymérique, **en ce que** ladite deuxième couche (8) de mélange polymérique est au contact de l'armature de carcasse (2), **en ce que** ladite deuxième couche (8) de mélange polymérique s'étend axialement jusqu'au moins l'extrémité axiale de la bande de roulement (6), et **en ce que** ladite deuxième couche (8) de mélange polymérique comporte une charge renforçante constituée :
(i) soit par du noir de carbone de surface spécifique BET comprise entre 30 et 160 m²/g, employé à un taux égal ou supérieur à 15 pce et inférieur ou égal à 28 pce,
(ii) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique comprise entre 30 et 260 m²/g employée à un taux supérieur ou égal à 15 pce et inférieur ou égal à 40 pce,
(iii) soit par un coupage de noir de carbone décrit en (i) et une charge blanche décrite en (ii), dans lequel le taux global de charge est supérieur ou égal à 15 pce et inférieur ou égal à 50 pce et le taux en pce de charge blanche est supérieur ou égal au taux de noir de carbone en pce moins 5.

8. Pneumatique (1) selon l'une des revendications précédentes, **caractérisé en ce que** ledit pneumatique comprend une deuxième couche (8) de mélange polymérique, **en ce que** ladite deuxième couche (8) de mélange polymérique est axialement au contact de la première couche (7) de mélange polymérique, **en ce que** ladite deuxième couche (8) de mélange polymérique est au contact de l'armature de carcasse (2), **en ce que** ladite deuxième couche (8) de mélange polymérique s'étend axialement jusqu'au moins l'extrémité axiale de la bande de roulement (6), et **en ce que** ladite deuxième couche (8) de mélange polymérique constitue une zone tampon prévue pour piéger l'oxygène extérieur à ladite deuxième couche.

9. Pneumatique (1) selon l'une des revendications précédentes, **caractérisé en ce que** ladite première couche (7) de mélange polymérique comporte une charge renforçante constituée :
(i) soit par du noir de carbone de surface spécifique BET comprise entre 30 et 160 m²/g, employé à un taux égal ou supérieur à 15 pce et inférieur ou égal à 28 pce,
(ii) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique comprise entre 30 et 260 m²/g employée à un taux supérieur ou égal à 15 pce et inférieur ou égal à 40 pce,
(iii) soit par un coupage de noir de carbone décrit en (i) et une charge blanche décrite en (ii), dans lequel le taux global de charge est supérieur ou égal à 15 pce et inférieur ou égal à 50 pce et le taux en pce de charge blanche est supérieur ou égal au taux de noir de carbone en pce moins 5.

## Patentansprüche

1. Luftreifen (1) mit radialer Karkassenbewehrung (2), die aus mindestens einer Schicht metallischer Verstärkungselemente besteht, wobei der Luftreifen eine Scheitelbewehrung (5) enthält, die selbst radial von einem Laufstreifen (6) überlagert wird, wobei der Laufstreifen durch zwei Flanken mit zwei Wülsten verbunden ist, wobei der Luftreifen eine erste Schicht (7) aus Polymermischung radial zwischen der Karkassenbewehrung (2) und der radial am weitesten innen liegenden Schicht (51) von Verstärkungselementen der Scheitelbewehrung (5) enthält, **dadurch gekennzeichnet, dass** die erste Schicht (7) aus Polymermischung eine Pufferzone bildet, die vorgesehen ist, um den Sauerstoff außerhalb der ersten Schicht einzuschließen, dass die axiale Breite der ersten Schicht (7) mindestens gleich 70% der Breite der radial am weitesten innen liegenden Schicht (51) von Verstärkungselementen der Scheitelbewehrung ist, dass die axiale Breite der ersten Schicht (7) höchstens gleich der Breite der radial am weitesten innen liegenden Schicht (51) von Verstärkungselementen der Scheitelbewehrung (5) ist, und dass die Dicke, gemessen in radialer Richtung, der ersten Schicht (7) größer ist als φ, wobei φ der Durchmesser der Verstärkungselemente der radial am weitesten innen liegenden Schicht (51) der Scheitelbewehrung ist.

2. Luftreifen (1) nach Anspruch 1, **dadurch gekennzeichnet, dass** die Dicke, gemessen in radialer Richtung, der ersten Schicht (7) geringer ist als 3φ, wobei φ der Durchmesser der Verstärkungselemente der radial am weitesten innen liegenden Schicht (51) der Scheitelbewehrung ist.

3. Luftreifen (1) nach einem der Ansprüche 1 oder 2, **dadurch gekennzeichnet, dass** die Dicke, gemessen in radialer Richtung, der ersten Schicht (7) größer ist als 1 mm, und vorzugsweise größer als 1,4 mm.

4. Luftreifen (1) nach einem der Ansprüche 1 bis 3, **dadurch gekennzeichnet, dass** die erste Schicht (7) aus Polymermischung die radial innen liegende Kalandrierschicht der radial am weitesten innen liegenden Schicht (51) der Scheitelbewehrung bildet.

5. Luftreifen (1) nach einem der Ansprüche 1 bis 4, **dadurch gekennzeichnet, dass** die eine Pufferzone bildende erste Schicht (7) aus Polymermischung ein Metallsalz aufweist.

6. Luftreifen (1) nach Anspruch 5, **dadurch gekennzeichnet, dass** das Metallsalz ein Kobaltsalz ist.

7. Luftreifen (1) nach einem der vorhergehenden Ansprüche, **dadurch gekennzeichnet, dass** der Luftreifen eine zweite Schicht (8) aus Polymermischung enthält, dass die zweite Schicht (8) aus Polymermischung axial mit der ersten Schicht (7) aus Polymermischung in Kontakt ist, dass die zweite Schicht (8) aus Polymermischung mit der Karkassenbewehrung (2) in Kontakt ist, dass die zweite Schicht (8) aus Polymermischung sich axial bis mindestens zum axialen Ende des Laufstreifens (6) erstreckt, und dass die zweite Schicht (8) aus Polymermischung einen verstärkenden Füllstoff aufweist, der besteht aus:
(i) entweder Ruß mit einer spezifischen Oberfläche BET zwischen 30 und 160 m²/g, der in einem Anteil gleich oder höher als 15 pce und niedriger als oder gleich 28 pce verwendet wird,
(ii) oder einem hellen Füllstoff von der Art Kieselsäure und/oder Aluminiumoxid, der SiOH und/oder AlOH-Oberflächenfunktionen aufweist, der aus der Gruppe ausgewählt wird, die von den gefällten oder pyrogenen Kieselsäuren, den Aluminiumoxiden oder den Aluminosilikaten oder auch den während oder nach der Synthese modifizierten Rußen mit einer spezifischen Oberfläche zwischen 30 und 260m²/g gebildet wird, der in einem Anteil von mehr als oder gleich 15 pce und geringer als oder gleich 40 pce verwendet wird,
(iii)oder durch ein Verschneiden von unter (i) beschriebenem Ruß und einem unter (ii) beschriebenen hellen Füllstoff, wobei die Gesamtfüllrate höher als oder gleich 15 pce und niedriger als oder gleich 50 pce und der Anteil in pce von hellem Füllstoff höher als der oder gleich dem Anteil von Ruß in pce minus 5 ist.

8. Luftreifen (1) nach einem der vorhergehenden Ansprüche, **dadurch gekennzeichnet, dass** der Luftreifen eine zweite Schicht (8) aus Polymermischung enthält, dass die zweite Schicht (8) aus Polymermischung axial mit der ersten Schicht (7) aus Polymermischung in Kontakt ist, dass die zweite Schicht (8) aus Polymermischung mit der Karkassenbewehrung (2) in Kontakt ist, dass die zweite Schicht (8) aus Polymermischung sich axial bis mindestens zum axialen Ende des Laufstreifens (6) erstreckt, und dass die zweite Schicht (8) aus Polymermischung eine Pufferzone bildet, die vorgesehen ist, um den Sauerstoff außerhalb der zweiten Schicht einzuschließen.

9. Luftreifen (1) nach einem der vorhergehenden Ansprüche, **dadurch gekennzeichnet, dass** die erste Schicht (7) aus Polymermischung einen Verstärkungsfüllstoff aufweist, der besteht aus:
(i) entweder Ruß mit einer spezifischen Oberfläche BET zwischen 30 und 160 m²/g, der in einem Anteil gleich oder höher als 15 pce und niedriger als oder gleich 28 pce verwendet wird,
(ii) oder einem hellen Füllstoff von der Art Kieselsäure und/oder Aluminiumoxid, der SiOH und/oder AlOH-Oberflächenfunktionen aufweist, der aus der Gruppe ausgewählt wird, die von den gefällten oder pyrogenen Kieselsäuren, den Aluminiumoxiden oder den Aluminosilikaten oder auch den während oder nach der Synthese modifizierten Rußen mit einer spezifischen Oberfläche zwischen 30 und 260m²/g gebildet wird, der in einem Anteil von mehr als oder gleich 15 pce und geringer als oder gleich 40 pce verwendet wird,
(iii)oder durch ein Verschneiden von unter (i) beschriebenem Ruß und einem unter (ii) beschriebenen hellen Füllstoff, wobei die Gesamtfüllrate höher als oder gleich 15 pce und niedriger als oder gleich 50 pce und der Anteil in pce von hellem Füllstoff höher als der oder gleich dem Anteil von Ruß in pce minus 5 ist.

## Claims

1. Tyre (1) with radial carcass reinforcement (2), made up of at least one layer of metal reinforcing elements, the said tyre comprising a crown reinforcement (5), itself radially capped by a tread (6), the said tread being connected to two beads via two side walls, the said tyre comprising a first layer (7) of polymer compound radially between the carcass reinforcement (2) and the radially innermost layer (51) of reinforcing elements of the crown reinforcement (5), **characterized in that** the said first layer (7) of polymer compound constitutes a buffer zone designed to trap oxygen on the outside of the said first layer, **in that** the axial width of the said first layer (7) is at least equal to 70% of the width of the radially innermost layer (51) of reinforcing elements of the crown reinforcement, **in that** the axial width of the said first layer (7) is at most equal to the width of the radially innermost layer (51) of reinforcing elements of the crown reinforcement and **in that** the thickness, measured in the radial direction, of the said first layer (7) is greater than φ, φ being the diameter of the reinforcing elements of the radially innermost layer (51) of the crown reinforcement.

2. Tyre (1) according to the Claim 1, **characterized in that** the thickness, measured in the radial direction, of the said first layer (7) is less than 3φ, φ being the diameter of the reinforcing elements of the radially innermost layer (51) of the crown reinforcement.

3. Tyre (1) according to one of Claims 1 or 2, **characterized in that** the thickness, measured in the radial direction, of the said first layer (7) is greater than 1 mm and preferably greater than 1.4 mm.

4. Tyre according to one of Claims 1 to 3, **characterized in that** the said first layer (7) of polymer compound constitutes the radially inner calendering layer of the radially innermost layer (51) of the crown reinforcement.

5. Tyre (1) according to one of Claims 1 to 4, **characterized in that** the said first layer (7) of polymer compound constituting a buffer zone contains a metal salt.

6. Tyre (1) according to Claim 5, **characterized in that** the metal salt is a cobalt salt.

7. Tyre (1) according to one of the preceding claims, **characterized in that** the said tyre comprises a second layer (8) of polymer compound, **in that** the said second layer (8) of polymer compound is axially in contact with the first layer (7) of polymer compound, **in that** the said second layer (8) of polymer compound is in contact with the carcass reinforcement (2), **in that** the said second layer (8) of polymer compound extends axially at least as far as the axial end of the tread (6), and **in that** the said second layer (8) of polymer compound comprises a reinforcing filler made up:
(i) either of carbon black with a BET specific surface area of between 30 and 160 m²/g, used at contents greater than or equal to 15 phr and less than or equal to 28 phr,
(ii) or of a white filler of the silica and/or alumina type comprising SiOH and/or AlOH surface functional groups selected from the group consisting of precipitated or pyrogenated silicas, aluminas or aluminosilicates or even carbon blacks modified during or after synthesis with specific surface areas of between 30 and 260 m²/g used at contents greater than or equal to 15 phr and less than or equal to 40 phr,
(iii) or of a cut of carbon black described at (i) with a white filler described at (ii), in which cut the overall filler content is greater than or equal to 15 phr and less than or equal to 50 phr and the phr content of white filler is greater than or equal to the phr content of carbon black minus 5.

8. Tyre (1) according to one of the preceding claims, **characterized in that** the said tyre comprises a second layer (8) of polymer compound, **in that** the said second layer (8) of polymer compound is axially in contact with the first layer (7) of polymer compound, **in that** the said second layer (8) of polymer compound is in contact with the carcass reinforcement (2), **in that** the said second layer (8) of polymer compound extends axially at least as far as the axial end of the tread (6), and **in that** the said second layer (8) of polymer compound constitutes a buffer zone designed to trap oxygen on the outside of the said second layer.

9. Tyre (1) according to one of the preceding claims, **characterized in that** the said first layer (7) of polymer compound contains a reinforcing filler made up:
(i) either of carbon black with a BET specific surface area of between 30 and 160 m²/g, used at contents greater than or equal to 15 phr and less than or equal to 28 phr,
(ii) or of a white filler of the silica and/or alumina type comprising SiOH and/or AlOH surface functional groups selected from the group consisting of precipitated or pyrogenated silicas, aluminas or aluminosilicates or even carbon blacks modified during or after synthesis with specific surface areas of between 30 and 260 m²/g used at contents greater than or equal to 15 phr and less than or equal to 40 phr,
(iii) or of a cut of carbon black described at (i) with a white filler described at (ii), in which cut the overall filler content is greater than or equal to 15 phr and less than or equal to 50 phr and the phr content of white filler is greater than or equal to the phr content of carbon black minus 5.
